# EUROPEAN PATENT SPECIFICATION

(11) **EP 3 210 690 B1**
(45) Date of publication and mention of the grant of the patent: **24.02.2021**
(21) Application number: 15851835.7
(22) Date of filing: 30.09.2015
(51) Int. Cl.: B21J 15/38

(54) **ELECTRIC RIVETING TOOL**
ELEKTRISCHES NIETWERKZEUG
OUTIL DE RIVETAGE ÉLECTRIQUE

(30) Priority: 24.10.2014 CN 201410573992
(43) Date of publication of application: 30.08.2017
(73) Proprietor: Kunshan Magic Tool Co., Ltd, Yushan Town, Kunshan City (CN)
(72) Inventor: HONG, Jingsong, Anhui 236000 (CN)
(74) Representative: Kayahan, Senem
(86) International application number: PCT/CN2015/091310
(87) International publication number: WO 2016/062192

(56) References cited:
- CN-A- 1 175 916
- CN-A- 101 579 717
- CN-A- 103 372 626
- CN-A- 104 439 022
- JP-A- 2003 266 143
- US-A1- 2008 012 453
- US-B1- 6 684 470

## Description

### TECHNICAL FIELD

The present invention relates to the field of mechanical technology, particularly to an electric riveting tool.

### BACKGROUND

Riveting tool is a tool which is specially used to mount rivets, and includes pneumatic riveting gun and electric riveting gun. The pneumatic riveting tool has the advantages of working fast and maximum tension. However, the hardware requirement is that air source is necessary, and air tube should be connected to the air source when in use. During pull-riveting, the noise is loud. Though the riveting tension is maximized, the drawback of the requirement for big volume is brought up accordingly. Thus, it is especially not suitable for field work. However, since the electric riveting gun has a handheld power source, it is capable of the field work. Thus, the electric riveting gun is widely used. However, since the electric riveting gun has the following limits, it brings too much inconvenience to the operator.

There are two manners for the electric riveting tool to discharge broken and abandoned rivet rod. One is to discharge the rivet from the front of the head. With such structure, the user is worried that harm may be caused by discharging the abandoned rivet rod automatically while in use. The user will wait till the abandoned rivet rod is out to load new rivet. This is not convenient for human use. Moreover, it is not convenient to collect abandoned rivet rod. Nowadays, the structure of riveting tool which is broadly spread is based on a tool (US patent publication No.: US005473805A). Though improvements have been made in many ways, the following defects remain:
(I) Since on the discharging axis of abandoned rivet rod on which screw rod nut assembly is positioned, the gear axis and the motor central axis are parallel to each other. Thus, the parameters of each system cannot be designed as required independently, and are restricted by the guideline to discharge the abandoned rivet rod smoothly. More specifically:
   (1) The motor meshing teeth that engage with the motor gear cannot be large, and cannot go beyond the pull-riveting and the discharging axis of abandoned rivet rod. Otherwise, the abandoned rivet rod cannot be discharged. Thus, the number of teeth and the number of modules of the gear are subject to great restrictions, and are limited within an extreme scope.
   (2) Under the condition that the motor does not interfere and space is not wasted, the motor is engaged with the motor meshing teeth. Thus, the size of the motor is restricted. The rotation speed and the power of the motor are heavily related to the size of the motor. If the motor is too small, the torsion and the power will decrease. If the motor is big, with the increase of the power, the motor shaft will be bigger. The motor gear should also be big. Otherwise, the engagement cannot be achieved. When the motor gear is big, the reduction ratio is affected. Thus, in design, it is hard to select suitably matched motor freely.
   (3) The screw rod nut part is the part in which the outside of the nut is processed to provide a gear. The process is complex, and the requirement is high. The critical defect is that if the gear of the screw rod nut is designed to be big, space will be wasted. If the gear is designed to be small, the engaging condition will not be met. To sum up, when this tool is in design, the rotation speed of the motor, the reduction ratio of the reduction gear, the size of the screw rod cannot be designed most reasonably as required. Usually, when a large motor is pulling a small load, a low speed will be caused. Otherwise, when a small motor is pulling a large load, the load cannot be moved. Currently, the electric riveting tool cannot break the rivet which has a high riveting strength, such as a ring-grooved rivet.
   (4) The requirement for the match of the motor assembly, the gear, and the screw rod assembly is high. The above three factors should be ensured to be parallel to each other. Meanwhile, the three axes should be ensured to be in the same plane. If a slight deviation occurs in terms of the parallelism and the planeness, the engaging requirement will be affected, making the tool noisy.
(II) Regarding the appearance design, in order to discharge the rivet rod smoothly, the arrangement of each part is restricted to parallel arrangement. For example, the motor must be positioned along the direction in parallel to the screw rod. The space usage is heavily restricted, causing a great waste of space. The appearance of the tool is bloated. The handheld gravity center cannot meet the ergonomics requirement. The web (a portion of the hand between the thumb and the index) of the holding hand does not have a good force point. The user is easy to get tired by using the tool. Under the current condition, it is hard to change the mechanical arrangement which is not convenient for human use. The Japanese patent document JP 2003 266143 A (LOBTEX CO LTD) published on Sep 24, 2003, forming the basis for the preamble of claim 1, discloses another riveting tool known in the art.

### SUMMARY

### TECHNICAL PROBLEM

In order to solve the above technical problem, the purpose of the present invention is to provide an excellent riveting electric tool. Regarding this riveting electric tool, a hollow hole is designed in the sun gear on the motor shaft and the planet gear reducer (also called deceleration system). Moreover, the power motor assembly, the planet gear deceleration system, the screw rod transmission system, and the pull-riveting system are on the same axis. As a result, after the riveting, under the guiding of the top core tube and the discharge tube, the abandoned rivet rod can pass through directly, and enter the rivet collection barrel. When the tool is used in a handheld manner, the design complies with the ergonomic principle. The connection between each part is simple and reliable. The tool can be transformed into different styles of tools by simple adjustments according to different rivets. Specifically, when pulling the rivet with a low tension, the design can be altered so as to adjust the speed to be high. When pulling a rivet with a high breakage force, the design can be altered to increase the tension and lower the speed. Regarding these designs, only the motor, planet gear deceleration system, or ball screw rod (the speed can be changed by altering the size of the screw pitch of ball screw rod) need to be replaced. With the tool, whose structure can be altered with different parameters, the user can use the most suitable tool which meets his/her demand based on their own needs.

### SOLUTION OF THE PROBLEM

### TECHNICAL SOLUTION

Technical solutions of the present invention are as below:
A riveting electric tool includes an outer cover, a trigger, a circuit board, a rivet collection barrel, a pull-riveting system, a screw rod transmission system, a planet gear reducer (also called deceleration system), and a power motor assembly.

The screw rod transmission system includes an idler wheel positioning block, a ball screw rod, a screw rod nut, a front bearing support, a rear bearing support, and a connection shaft. The ball screw rod has a hollow structure. A front end of the ball screw rod is fixed by the idler wheel positioning block. A rear end of the ball screw rod is connected to the screw rod nut. The screw rod nut is provided in the front bearing support. The rear bearing support is connected to the front bearing support. The connection shaft passes through the rear bearing support and is fixed to the screw rod nut. The idler wheel positioning block is provided on the front bearing support.

The power motor assembly includes motor and motor shaft. The motor shaft is configured to have a hollow structure. A front end of the motor shaft is provided with a motor gear.

The planet gear deceleration system includes a rear planet gear support, a front planet gear support, a sun gear I, a sun gear II, a planet gear, and an internal gear I. The sun gear I and the sun gear II are configured to have hollow structures. The sun gear II is provided with three planet gears III and one pinion. The three planet gears III engage with the motor gear, and at the same time engage with the internal gear I. The internal gear I is restricted and mounted in the front planet gear support. The sun gear II is provided with three planet gears I. The three planet gears I engage with the pinion. The rear planet gear support and the front planet gear support are connected together.

The pull-riveting system includes a head, an outer sleeve, a three-jaw, a clamping sleeve, a top core assembly, a top core spring, and a spring sleeve. The outer sleeve is connected to the front bearing support through the outer sleeve locknut. The head is provided on a front end of the outer sleeve. The three-jaw is provided on the rear end of the head. The clamping sleeve is provided on the three-jaw. The clamping sleeve is provided in the outer sleeve. The top core assembly is provided on the tail portion of three-jaw. The top core assembly includes the top core tube and the top core which is provided on the front end of the top core tube. The top core tube is sleeved with the top core spring. The spring sleeve is provided outside the top core spring.

The spring sleeve is connected to the front end of the screw. The planet gear deceleration system is fixed to the screw rod nut through the connection shaft. the power motor assembly is connected to the planet gear deceleration system through the motor gear on the motor shaft. The rivet collection barrel is provided on the rear end of the motor power assembly. The discharge tube passes through the motor shaft and the planet gear deceleration system and is next sleeved outside the top core tube. The outer cover is provided with a circuit board, a trigger, and a travel control plate. The circuit board is respectively connected to the motor and the travel control plate through the control line. The circuit board can also be provided with an overcurrent protection. Both ends of the travel control plate are provided with inductor I and inductor II. The idler wheel positioning block is provided with a magnet. The inductors are under the magnet.

Further, the rivet collection barrel is connected to the outer cover through the screw thread.

Further, central lines of the power motor assembly, the planet gear deceleration system, the screw rod transmission system, and the pull-riveting system are on the same axis as a riveting direction.

### BENEFICIAL EFFECTS OF INVENTION

### BENEFICIAL EFFECTS

The present rivet nut electric tool has the following advantages and beneficial effects:
(1) The new technology in which the motor has a hollow motor shaft is used. The motor has no substantial restriction in terms of the size and the rotation speed. The motor size can be adjusted if necessary. Moreover, the motor not only provides the power, but also enhances the function of discharging the abandoned rivet rod.
(2) The planet gear reducer (also called deceleration system is used. The planet gear deceleration system has the advantages of small size, low weight, high bearing capacity, long lifetime, smooth operation, low noise, large output torque, high transmission efficiency (since the engaging area is large, the torsion is great, and the transmission efficiency is high), and good safety performance. What is most important is that, the sun gear is configured to have a hollow structure, such that the abandoned rivet rod indirectly passes through the hollow structure. The entire space is used reasonably and completely. The design of the reduction ratio of the planet gear deceleration system is liberated entirely. The reduction ratio can be designed sufficiently according to the requirement. Moreover, the planet gear deceleration system not only performs the deceleration function, but also actually enhances the discharging function of abandoned rivet rod.
(3) The structure of the screw rod nut becomes simple. The nut is not bound to be combined with a gear. The process is simple. Moreover, the screw rod nut can be designed according to the magnitude of the tension. The diameter and the length of the screw rod nut can be altered according to the changes of riveting strength. When the tension is large, the screw rod nut with a large diameter, a relatively small screw pitch, and a long thread length is used. Thus, the tool is provided to be slightly big, and the pull-riveting rate is lowered. When the tension is small, the screw rod nut with a small diameter, a large screw pitch, and a short thread length is used. Thus, the tool is provided to be small, and the pull-riveting rate is raised. In view of the above, this tool system has a reasonable division of labor. For example, regarding the aluminum rivet with a small tension, the following parts can be selected: a fast motor with a small power, a planet gear deceleration system with a low reduction ratio, and a screw rod transmission system with a small volume and a slightly large screw pitch. Thus, the riveting tool with a high speed and a small tension can be provided. Vice versa, the riveting tool with a large tension can be provided. With this structure, since directions the power motor assembly, the planet gear deceleration system, the screw rod transmission system and pull-riveting form a line, the adjustment does not subject to too many restrictions. These three parts can be replaced to meet the demand, such that reasonable and balanced match among the motor, the planet gear deceleration system, and the screw rod transmission system can be reached. When a small horse is pulling a small cart, the cart is pulled quickly. When the load is high and the motor is large, the ring-grooved rivet can be bound.
(4) Another beneficial effect brought by using the above structure is that the directions of the power motor assembly, the planet gear deceleration system, and the screw rod transmission system and pull-riveting form a line. The abandoned rivet rod can be discharged smoothly. The tool is compact and aesthetic. Space is fully used. The handheld gravity can be made to comply with the requirement of ergonomics. Moreover, the fit of the motor assembly of the tool, the planet deceleration box, and the screw rod nut assembly is simple. Even if slight deviation occurs in terms of coaxiality, the noise will not be too high. Moreover, the match among the three parts is very simple. In addition, the planet gear deceleration system has an extremely low noise. Thus, the noise of the tool in use is far lower than the engaging sound of the gear of ordinary tool.
(5) The mechanism can use the matured planet gear deceleration system which realizes the speed control with two shifts. While in use, the shift can be directly switched if necessary to meet the demand.

The tool is easy to carry, and has the high speed and strength of the pneumatic tool, and can be used in field work conveniently. The parameters can be provided according to the demand. The parameters of the electric riveting tool can be configured to be the most reasonable. The highly-humanized riveting tool is used, such that the labor is immensely liberated, and the working efficiency is improved.

### BRIEF DESCRIPTION OF THE DRAWINGS

### DESCRIPTION OF DRAWINGS

Figure 1 is the structural schematic diagram of the riveting electric tool of the present invention.
Figure 2 is the local structural schematic diagram of the riveting electric tool of the present invention.
Figure 3 is the structural schematic diagram of a power motor assembly of the present invention.
Figure 4 is the structural schematic diagram of the top core assembly of the present invention.
Figure 5 is the present invention planet gear deceleration system the assembling schematic diagram.
Figure 6 is the present invention planet gear deceleration system the exploded diagram.
Figure 7 is the schematic diagram of the riveting electric tool which is configured with the third level deceleration system of the present invention.
Figure 8 is the assembling schematic diagram of the planet gear deceleration system with the third level deceleration system of the present invention.
Figure 9 is the exploded diagram of the planet gear deceleration system with the third level deceleration system of the present invention.

In the Figures: 1. head; 2. outer sleeve; 3. three-jaw; 4. clamping sleeve; 5. top core assembly; 6. top core spring; 7. spring sleeve; 8. outer sleeve locknut; 9. idler wheel positioning block; 10. magnet; 11. ball screw rod; 12. front bearing support; 13. screw rod nut; 14. fixed pin; 15. connection shaft; 16. rear bearing support; 17. sun gear I; 18. planet gear; 19. sun gear II; 20. internal gear; 21. front planet gear support; 22. rear planet gear support; 23. motor; 24. discharge tube; 25. outer cover; 26. rivet collection barrel; 27. circuit board; 28. trigger; 29. travel control plate; 30. motor shaft; 31. top core; 32. top core tube; 33. motor gear; 34. inductor I; 35. inductor II; 36. output terminal of sun gear; 37. transmission connecting support; 38. transmission fork; 39. pinion; 40. transmission shifting switch; 181. planet gear I; 182. planet gear II; 183. planet gear III; 201. internal gear I; 202. transmission slidable internal gear; 203. internal gear II.

### DETAILED DESCRIPTION OF THE INVENTION

### EMBODIMENTS OF THE PRESENT INVENTION

Hereinafter, the present invention is further described with reference to the figures.

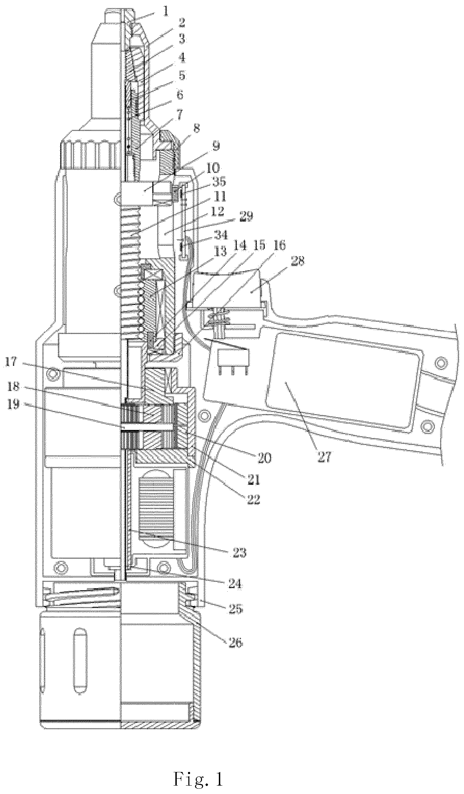

As shown in Figure 1, Figure 2, Figure 3, Figure 4, Figure 5, and Figure 6, the riveting electric tool includes outer cover 25, trigger 28, circuit board 27, rivet collection barrel 26, a pull-riveting system, a screw rod transmission system, a planet gear deceleration system, and a power motor assembly.

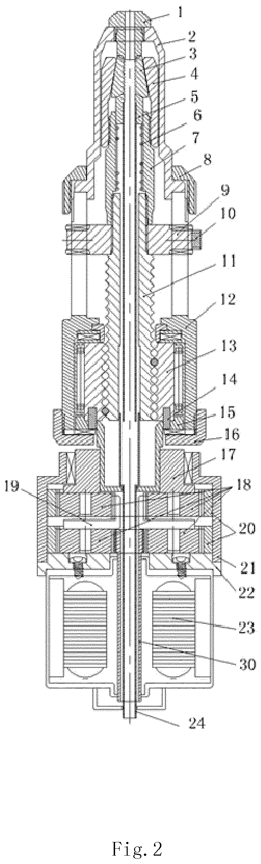

As shown in Figure 1 and Figure 2, the screw rod transmission system includes idler wheel positioning block 9, ball screw rod 11, screw rod nut 13, front bearing support 12, rear bearing support 16, and connection shaft 15. Ball screw 11 has a hollow structure, which is used for top core tube 32 to pass therethrough, for discharging abandoned push rod. The front end of the ball screw rod is fixed by idler wheel positioning block 9, and the rear end of the ball screw rod is connected to screw rod nut 13. Screw nut 13 is provided in front bearing support 12. Rear bearing support 16 is connected to front bearing support 12. Connection shaft 15 passes rear bearing support 16 and is fixed to screw rod nut 13, which can be fixed by fixed pin 14. Idler wheel positioning block 9 is provided on front bearing support 12.

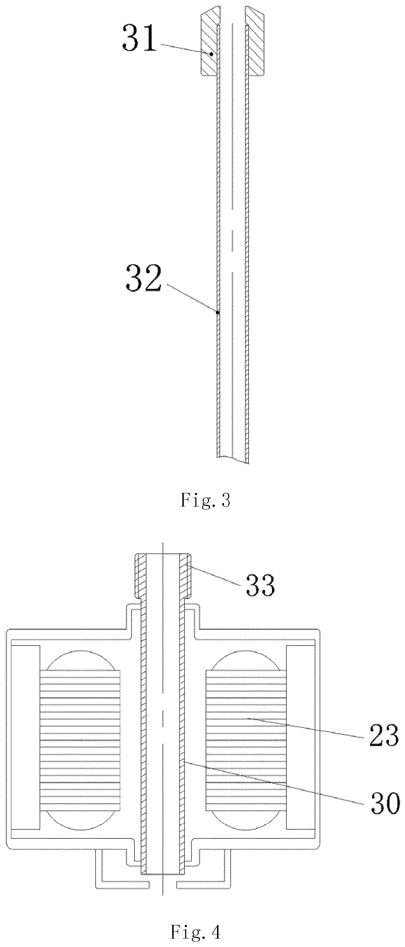

As shown in Figure 2 and Figure 4, the power motor assembly includes motor 23 and motor shaft 30. Motor shaft 30 is configured to have a hollow structure, which is used for discharge tube 24 to pass therethrough, for discharging abandoned push rod. Meanwhile, the limited space can be used to the maximum extent, such that the tool is compact and aesthetic. The front end of motor shaft 30 is provided with motor gear 33.

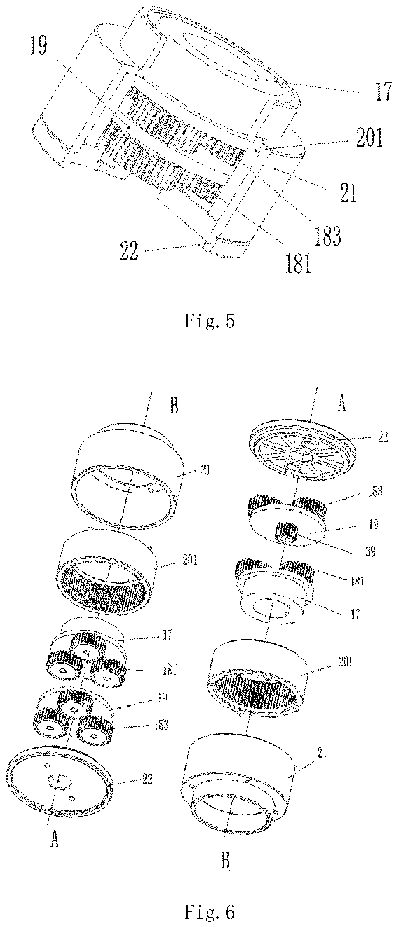

As shown in Figure 5 and Figure 6, the planet gear deceleration system includes rear planet gear support 22, front planet gear support 21, sun gear I 17, sun gear II 19, planet gear 18, and internal gear I 201. Sun gear I 17 and sun gear II 19 are configured to have hollow structures. Sun gear II 19 is provided with three planet gears III 183 and one pinion 39. Three planet gears III 183 engage with motor gear 33, and at the same time engage with internal gear I 201. Internal gear I 201 is restricted and mounted in front planet gear support 21. Sun gear II 19 is provided with three planet gears I 181. Three planet gears I 181 engage with pinion 39. Rear planet gear support 22 and front planet gear support 21 are connected together. As such, a second level deceleration system is formed.

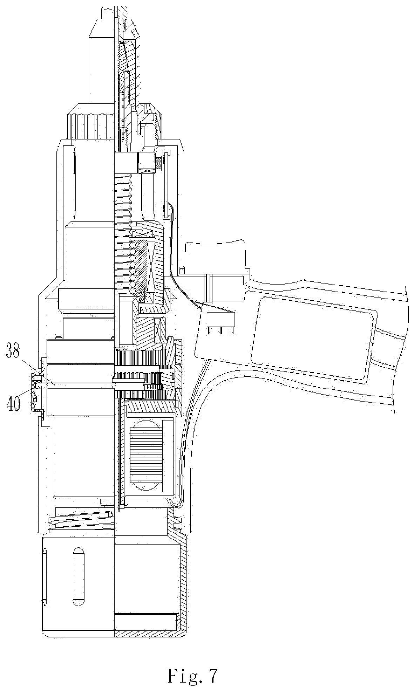

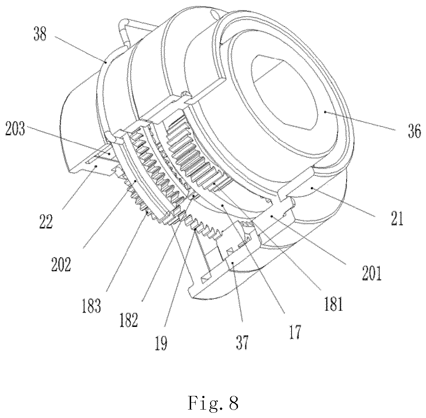

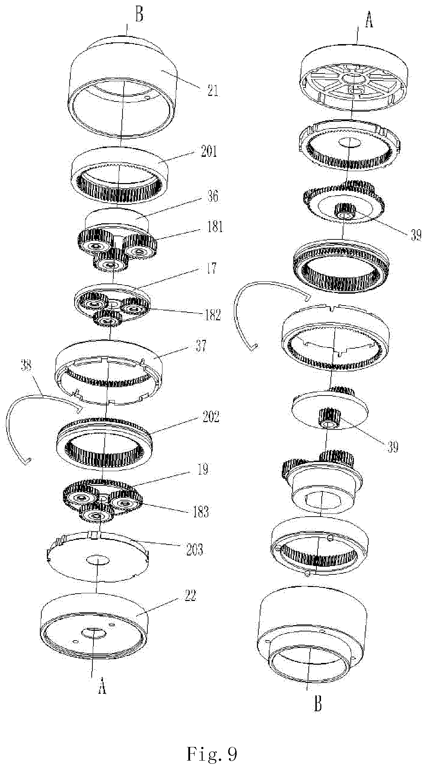

As shown in Figure 7, Figure 8 and Figure 9, the planet gear deceleration system may further be configured to have an apparatus which includes rear planet gear support 22, front planet gear support 21, sun gear I 17, sun gear II 19, planet gear 18, and internal gear 20. Sun gear 117 and sun gear II 19 are configured to have hollow structures. Sun gear II 19 is provided with three planet gears III 183. Three planet gears III 183 engage with motor gear 33, and at the same time engage with internal gear II 203. Internal gear II 203 is restricted and mounted in rear planet gear support 22. Rear planet gear support 22 is provided with screw hole, through which the screw passes to be fixed on motor 23. After the outer gear is processed, sun gear II 19 engage with transmission slidable internal gear 202. Transmission connecting support 37 is provided in the groove of rear planet gear support 22, and transmission connecting support 37 is provided with transmission fork 38. Transmission fork 38 drives clutch transmission slidable internal gear 202. The above structures form the first level deceleration system of the planet gear deceleration system. When transmission slidable internal gear 202 engages with sun gear II 19, transmission fork 38 drives clutch to separate from transmission connecting support 37. Similarly, when transmission slidable internal gear 202 engages with transmission connecting support 37, the separation from sun gear II 19 is performed. Sun gear I 17 is provided with three planet gears II 182. Three planet gears II 182 engage with pinion 39 which is on sun gear II 19, and at the same time engage with transmission slidable internal gear 202. The above structures form the second level deceleration system of the planet gear deceleration system. When slidable internal gear 202 simultaneously engage with three planet gears II 182 and the outer gear of sun gear II 19, the second level deceleration system loses the deceleration function. The reduction ratio remains the reduction ratio of the first level deceleration system. When slidable internal gear 202 simultaneously engage with three planet gears II 182 and is separated from the outer gear of sun gear II 19, the first level deceleration system and the second level deceleration system are independent from each other. Moreover, the output torque ratio of the second level deceleration system is greater than the torque of the first level deceleration system. Sun gear output terminal 36 is provided with three planet gears I 181. Three planet gears I 181 engage with pinion 39 on sun gear I 17 and at the same time engage with internal gear I 201. Sun gear output terminal 36 is fixed in front planet gear support 21. Rear planet gear support 22, transmission connecting support 37, and front planet gear support 21 are sequentially restricted and connected together. The above structures form the third level deceleration system of the planet gear deceleration system. The output torque of sun gear output terminal 36 drives screw rod nut 13 to rotate. The output torque of the third level deceleration system is the greatest. When transmission slidable internal gear 202 only engages with planet gear II 182, the third level deceleration is performed. Transmission shifting switch 40 is provided outside transmission fork 38. The reduction ratio can be adjusted by shifting. In the above two apparatus, since engaging transmission manner of planet gear 18 is used, the engaging area is large, the torque is more, and the transmission efficiency is high. Also, if necessary, the transmission ratio can be adjusted by adjusting the number of teeth of internal gear 20, pinion 39, and motor gear 33, such that the aim and demand of reduction ratio can be reached. The adjustment is convenient. The adjustability is strong. Moreover, motors with different power can be selected purposefully.

As shown in Figure 1 and Figure 2, the pull-riveting system includes head 1, outer sleeve 2, three-jaw 3, clamping sleeve 4, top core assembly 5, top core spring 6, and spring sleeve 7. The outer sleeve 2 is connected to front bearing support 12 through outer sleeve locknut 8. The front end of outer sleeve 2 is provided with head 1. The rear end of head 1 is provided with three-jaw 3. Three-jaw 3 is provided with clamping sleeve 4. Clamping sleeve 4 is provided in outer sleeve 2. The inner bore surface of clamping sleeve 4 which is connected to three-jaw 3 is configured to have a slope. The tail portion of three-jaw 3 is provided with top core assembly 5. Top core assembly 5 includes top core tube 32 and top core 31 which is provided on the front end of top core tube 32. Top core tube 32 is sleeved with top core spring 6. Spring sleeve 7 is provided outside top core spring 6. Top core spring 6 props three-jaw 3 on top core 31 through the effect of elastic force, such that the rivet can be loaded smoothly. When the pull-riveting is performed, ball screw rod 11 drives three-jaw 3 in clamping sleeve 4 to move backward. Under the guidance of the slope of clamping sleeve 4, three-jaw 3 automatically fraps to clamp the rivet.

Spring sleeve 4 is connected to the front end of ball screw rod 11. The planet gear deceleration system is fixed to screw rod nut 13 through connection shaft 15. The power motor assembly is connected to the planet gear deceleration system through motor gear 33 on motor shaft 30. The rear end of the motor power assembly is provided with rivet collection barrel 26. Discharge tube 24 passes through motor shaft 30 and planet gear deceleration system, and next is sleeved outside top core tube 32. The broken abandoned rivet rod falls in discharge tube 24 through the rear end of top core tube 32. The discharging of abandoned rivet rod is smooth. The safety is high. Outer cover 25 is provided with circuit board 27, trigger 28, and travel control plate 29. Circuit board 27 is respectively connected to motor 23 and travel control plate 29 through the control line. Two ends of travel control plate 29 are provided with inductor I 34 and inductor II 35, respectively. The idler wheel positioning block 9 is provided with magnet 10. Inductors are positioned under magnet 10.

Rivet collection barrel 26 is connected to outer cover 25 through screw thread. The connection is convenient. Abandoned rivet rod can be removed easily.

Central lines of the power motor assembly, planet gear deceleration system, screw rod transmission system and pull-riveting system are on the same axis as the riveting direction. The guidance of axis to smoothly discharge abandoned rivet rod is met. Abandoned rivet rod can be discharged smoothly. Moreover, the noise generated by the tool in use is far weaker than the engaging sound of the gear of regular tool. Moreover, the assembling work of the three parts is very simple.

In the above structure design as a whole, the arrangement of each part is reasonable. With the design on the same axis, the restriction and waste of the usage of space are avoided. The appearance of the tool is simple. When the tool is used in a handheld manner, the design complies with the ergonomic principle completely. The tool is easy to use and operate and can save the labor. The connection between each part is simple and reliable.

Regarding the apparatus in Figure 5 and Figure 6, the deceleration and the transmission are simple. Regarding the apparatus in Figure 7, Figure 8, and Figure 9, the deceleration and the transmission are described in detail as below. When in use, rivet is loaded from head 1. When pull-riveting is performed, trigger 28 is pulled. When inductor II 35 on travel control plate 29 senses that magnet 10 on idler wheel positioning block 9 is in a suitable position, the power supply drives motor 23 to rotate. Motor shaft 30 which is provided and processed with motor gear 33 drives the first level deceleration system of the planet gear deceleration system. Since internal gear II 203 is fixed and cannot move, planet gear III 183 rotates to drive sun gear II 19 to rotate. Sun gear II 19 again drives planet gear II 182 of the second level deceleration system to decelerate. Planet gear II 182 of the second level deceleration system is driven to rotate. Similarly, transmission slidable internal gear 202 of the second level deceleration system is fixed and cannot move. planet gear II 182 of the second level deceleration system drives sun gear I 17 to rotate. At this time, the deceleration and torsion increasing are completed. When the planet gear deceleration system is shifted from the second level to the third level, outer gear and groove are processed and provided on transmission slidable internal gear 202. The groove is controlled by transmission fork 38, so as to drive transmission slidable internal gear 202 to clutch. Clutch controlling can be performed through transmission shifting switch 40 by adjusting transmission fork 38. Transmission slidable internal gear 202 simultaneously engages with sun gear II 19 and planet gear II 182. Since the principle of planet deceleration is that the pinion on the sun gear drives internal gear to generate the reduction ratio. At this time, the sun gear directly engages with the internal gear, such that the gear ratio disappears, and the second level deceleration system does not work automatically. When transmission slidable internal gear 202 only engages with planet gear II 182 and is separated from sun gear II 19 which is provided with the outer gear, the second level of deceleration occurs. The advantage of adding the secondary transmission is that when the rivet with a small diameter dimension and a small riveting strength is pulled, the speed can be raised to improve the efficiency. When the rivet with a large diameter and a large riveting strength is pulled, the speed can be decelerated and the torsion can be increased, such that the rivet is pulled reliably. Sun gear output terminal 36 drives connection shaft 15 to rotate. connection shaft 15 and screw rod nut 13 are fixed with a plurality of fixed pins 14. Screw nut 13 drives ball screw rod 11. Since the front end of ball screw rod 11 is fixed in the groove of front bearing support 12 by idler wheel positioning block 9. The lower end of idler wheel positioning block 9 is provided with magnet 10. Magnet 10 induces inductor 134 and inductor II 35 on travel control plate 29 which is controlled by circuit board 27. Thus, ball screw rod 11 can only move along the axis to drive spring sleeve 7 to move. Spring sleeve 7 is connected together to clamping sleeve 4. The inner bore surface of clamping sleeve 4 is a slope. Three-jaw 3 is placed inside the clamping sleeve 4. The tail portion of three-jaw 3 is pushed by top core assembly 5. Top core spring 6 provides the pushing force. Thus, during the backward moving of ball screw rod 11, clamping sleeve 4 moves backward so as to make three-jaw 3 frap automatically. As such, the rivet rod can be grasped successfully and the pull-riveting can be performed. Till the pull-riveting is over, trigger 28 is released. When inductor I 34 on travel control plate 29 which is controlled by circuit board 27 senses that magnet 10 on idler wheel positioning block 9 is in a suitable position, motor 23 rotates reversely. Ball screw 11 moves forward. Three-jaw 3 is released. Abandoned rivet rod of broken rivet is discharged through top core tube 32 and discharge tube 24, and falls into rivet collection barrel 26.

Though embodiments of the present invention are described in detail and illustration above, it should be noted that the scope of the present invention is defined by the appended claims.

## Claims

1. A blind rivet electric setting tool, comprising:
a pull-riveting system;
a screw rod transmission system comprising a ball screw rod (11) having a hollow structure, a screw rod nut (13) connected at the rear end of the ball screw rod (11), and a front bearing support (12) in which the screw rod nut (13) is provided;
a planet gear reducer;
a power motor assembly comprising a motor (23) and a hollow motor shaft (30); and
a broken mandrel collection barrel (26) provided at a rear end of the power motor assembly; wherein
central lines of the power motor assembly, the planet gear reducer, the screw rod transmission system, and the pull-riveting system are on the same axis as a riveting direction;
**characterized in that** :
- the screw rod transmission system further comprises an idler wheel positioning block (9) provided on the front bearing support (12) and fixed at a front end of the ball screw rod (11), a rear bearing support (16) connected to the front bearing support (12), and a connection shaft (15) passing through the rear bearing support (16) and i fixed to the screw rod nut (13),
- the hollow motor shaft (30) is shaped at its front end to form a motor gear (33);
- the planet gear reducer comprises a sun gear 1 (17) and a sun gear II (19) configured to have hollow structures.

2. The blind rivet electric setting tool of claim 1, **characterized in that** the blind rivet electric setting tool further includes an outer cover (25), and the broken mandrel barrel (26) is connected to the outer cover (25) through threads.

3. The blind rivet electric setting tool of claim 1, **characterized in that** the planet gear reducer comprises
a rear planet gear support (22);
a front planet gear support (21);
the sun gear I (17); the sun gear II (19); a planet gear (18); and
an internal gear I (201);
wherein
the sun gear II (19) is provided with three planet gears III (183) and one pinion (39);
the three planet gears III (183) engage with the motor gear (33), and at the same time engage with the internal gear I (201);
the internal gear I (201) is restricted and mounted in the front planet gear support (21);
the sun gear II (19) is provided with three planet gears I (181);
the three planet gears I (181) engage with the pinion (39); and
the rear planet gear support (22) is connected to the front planet gear support (21).

4. The blind rivet electric setting tool of claim 1, **characterized in that** the pull-riveting system comprises
a head (1);
an outer sleeve (2);
a three-jaw (3);
a clamping sleeve (4);
a top core assembly (5);
a top core spring (6); and
a spring sleeve (7);
wherein
the outer sleeve (2) is connected to the front bearing support (12) through the outer sleeve locknut (8);
the head (1) is provided on a front end of the outer sleeve (2);
the three-jaw (3) is provided on the rear end of the head (1);
the clamping sleeve (4) is provided on the three-jaw (3);
the clamping sleeve (4) is provided in the outer sleeve (2);
the top core assembly (5) is provided on the tail portion of three-jaw (3);
the top core assembly (5) includes a top core tube (32) and a top core (31) which is provided on a front end of the top core tube (32);
the top core tube (32) is sleeved with the top core spring (6); and
the spring sleeve (7) is provided outside the top core spring (6).

5. The blind rivet electric setting tool of claim 4, **characterized in that** the blind rivet electric setting tool further comprises
an outer cover (25);
a trigger (28); and
a circuit board (27);
wherein
the spring sleeve (7) is connected to the front end of the ball screw rod (11);
the planet gear reducer is fixed to the screw rod nut (13) through the connection shaft (15);
the power motor assembly is connected to the planet gear reducer through the motor gear (33) on the hollow motor shaft (30);
a discharge tube (24) passes through the hollow motor shaft (30) and the planet gear reducer to sleeve outside the top core tube (32);
the outer cover (25) is provided with the circuit board (27), a trigger (28), and a travel control plate (29);
the circuit board (27) is respectively connected to the motor (23) and the travel control plate (29) through a control line;
both ends of the travel control plate (29) are provided with an inductor (34, 35);
the idler wheel positioning block (9) is provided with a magnet (10);
the inductor (34, 35) is located under the magnet (10).

## Patentansprüche

1. Elektrisches Blindniet-Setzgerät, umfassend:
ein Zugnietsystem;
ein Spindelübertragungssystem, umfassend eine Kugelspindel (11) mit einer hohlen Struktur, eine Spindelmutter (13), die mit dem hinteren Ende der Kugelspindel (11) verbunden ist, und einen vorderen Lagerträger (12), in dem die Spindelmutter (13) vorgesehen ist;
ein Planetenuntersetzungsgetriebe;
eine Leistungsmotoranordnung, die einen Motor (23) und eine Motorhohlwelle (30) umfasst; und
einen Dornbruch-Sammelzylinder (26), der an einem hinteren Ende der Leistungsmotoranordnung vorgesehen ist; wobei die Mittellinien der Leistungsmotoranordnung, des Planetenuntersetzungsgetriebes, des Spindelübertragungssystems und des Zugnietsystems auf der gleichen Achse wie eine Nietrichtung liegen;
**gekennzeichnet durch** das Spindelübertragungssystem folgendes umfasst;
einem Leerlaufrad-Positionierungsblock (9), der auf dem vorderen Lagerträger vorgesehen und an einem vorderen Ende der Kugelspindel (11) befestigt ist einem hinteren Lagerträger (16), der mit dem vorderen Lagerträger (12) verbunden ist, und
eine Verbindungswelle (15), die durch den hinteren Lagerträger verläuft und an der Gewindemutter (13) befestigt ist,
die Motorhohlwelle (30), die an ihrem vorderen Ende zu einem Motorgetriebe (33) geformt ist;
das Planetenuntersetzungsgetriebe, das ein Sonnengetriebe I (17) und ein Sonnengetriebe II (19) umfasst, die so konfiguriert sind, dass sie hohle Strukturen aufweisen.

2. Elektrisches Blindniet-Setzgerät nach Anspruch 1, **dadurch gekennzeichnet, dass** das elektrische Blindniet-Setzgerät ferner eine äußere Abdeckung (25) aufweist und der gebrochene Dornzylinder (26) mit der äußeren Abdeckung (25) durch Gewinde verbunden ist.

3. Elektrisches Blindniet-Setzgerät nach Anspruch 1, **dadurch gekennzeichnet, dass** das Planetenuntersetzungsgetriebe folgendes umfasst
einem hinteren Planetengetriebeträger (22);
einem vorderen Planetengetriebeträger (21);
das Sonnengetriebe I (17);
das Sonnengetriebe II (19);
ein Planetengetriebe (18); und
ein Innengetriebe I (201);
wobei
das Sonnenrad II (19) mit drei Planetengetrieben III (183) und einem Ritzel (39) versehen ist;
die drei Planetengetriebe III (183) in das Motorgetriebe (33) und gleichzeitig in das Innengetriebe I (201) eingreifen;
das Innengetriebe I (201) im vorderen Planetengetriebeträger (21) begrenzt und montiert ist;
das Sonnenrad II (19) mit drei Planetengetrieben I (181) versehen ist;
die drei Planetengetriebe I (181) mit dem Ritzel (39) in Eingriff stehen; und
wobei der hintere Planetengetriebeträger (22) mit dem vorderen Planetengetriebeträger (21) verbunden ist.

4. Elektrisches Blindniet-Setzgerät nach Anspruch 1, **dadurch gekennzeichnet, dass** das Zugnietsystem folgendes umfasst
einen Kopf (1);
eine äußere Hülse (2);
eine Dreibacke (3);
eine Spannhülse (4);
eine obere Kernanordnung (5);
eine obere Kernfeder (6); und
eine Federhülse (7);
wobei
die äußere Hülse (2) mit dem vorderen Lagerträger (12) durch die äußere Hülsensicherungsmutter (8) verbunden ist;
der Kopf (1) an einem vorderen Ende der äußeren Hülse (2) vorgesehen ist;
die Dreibacke (3) am hinteren Ende des Kopfes (1) vorgesehen ist;
die Spannhülse (4) an der Dreibacke (3) vorgesehen ist;
die Spannhülse (4) in der äußeren Hülse (2) vorgesehen ist;
die obere Kernanordnung (5) auf dem hinteren Teil der Dreibacke (3) vorgesehen ist;
die obere Kernanordnung (5) ein oberes Kernrohr (32) und einen oberen Kern (31) umfasst, der an einem vorderen Ende des oberen Kernrohrs (32) vorgesehen ist;
das obere Kernrohr (32) ist mit der oberen Kernfeder (6) umhüllt; und
die Federhülse (7) außerhalb der oberen Kernfeder (6) vorgesehen ist.

5. Elektrisches Blindniet-Setzgerät nach Anspruch 4, **dadurch gekennzeichnet, dass** das elektrische Blindniet-Setzgerät weiterhin folgendes umfasst
eine äußere Abdeckung (25);
einen Auslöser (28); und
eine Schaltungsplatte (27);
wobei
die Federhülse (7) mit dem vorderen Ende der Kugelgewindestange (11) verbunden ist; das Planetenuntersetzungsgetriebe über die Verbindungswelle (15) an der Gewindemutter (13) befestigt ist;
die Leistungsmotoranordnung mit dem Planetenuntersetzungsgetriebe durch das Motorgetriebe (33) auf der Motorhohlwelle (30) verbunden ist;
ein Entladungsrohr (24) durch die hohle Motorwelle (30) und das Planetenuntersetzungsgetriebe zur Hülse außerhalb des oberen Kernrohrs (32) führt;
die äußere Abdeckung (25) mit der Schaltungsplatte (27), einem Auslöser (28) und einer Fahrsteuerplatte (29) versehen ist;
die Schaltungsplatte (27) jeweils mit dem Motor (23) und der Fahrsteuerplatte (29) über eine Steuerleitung verbunden ist;
beide Enden der Fahrsteuerplatte (29) mit einem Induktor (34, 35) versehen sind;
der Leerlaufrad-Positionierungsblock (9) mit einem Magneten (10) versehen ist;
der Induktor (34, 35) unter dem Magneten (10) angeordnet ist.

## Revendications

1. Outil de réglage électrique de rivet aveugle, comprenant :
un système de rivetage par traction ;
un système de transmission à tige filetée comprenant une tige filetée à bille (11) ayant une structure creuse, un écrou de tige filetée (13) connecté à l'extrémité arrière de la tige filetée à bille (11), et un support de palier avant (12) dans lequel l'écrou de tige filetée (13) est prévu ;
un réducteur d'engrenage planétaire ;
un ensemble moteur à puissance comprenant un moteur (23) et un arbre moteur creux (30); et
un baril de collecte des mandrins cassés (26) prévu à l'extrémité arrière de l'ensemble moteur à puissance ;
dans lequel les lignes centrales de l'ensemble moteur à puissance, du réducteur d'engrenage planétaire, du système de transmission à tige filetée et du système de rivetage par traction sont sur le même axe qu'une direction de rivetage ;
**caractérisé en ce que** le système de transmission à tige filetée comprend en outre un bloc de positionnement de roue libre (9) prévu sur le support de palier avant (12) et fixé à une extrémité avant de la tige filetée à bille (11),
un support de palier arrière (16) connecté au support de palier avant (12), et
un arbre de connexion (15) passant à travers le support de palier arrière (16) et fixé à l'écrou de tige filetée (13),
- l'arbre moteur creux (30) est façonné à son extrémité avant pour former un engrenage moteur (33) ;
- le réducteur d'engrenages planétaires comprend un engrenage solaire I (17) et un engrenage solaire II (19) configurés pour avoir des structures creuses.

2. Outil de réglage électrique de rivet aveugle selon la revendication 1, **caractérisé en ce que** l'outil de réglage électrique de rivet aveugle comprend en outre un couvercle extérieur (25), et le baril de mandrin cassé (26) est connecté au couvercle extérieur (25) par des filetages.

3. Outil de réglage électrique de rivet aveugle selon la revendication 1, **caractérisé en ce que** le réducteur d'engrenage planétaire comprend
un support d'engrenage planétaire arrière (22) ;
un support d'engrenage planétaire avant (21) ;
l'engrenage solaire I (17);
l'engrenage solaire II (19);
un engrenage planétaire (18) ; et
un engrenage interne I (201) ;
dans lequel
l'engrenage solaire II (19) est équipé de trois engrenages planétaires III (183) et d'un pignon (39) ;
les trois engrenages planétaires III (183) s'engagent avec l'engrenage moteur (33), et en même temps s'engagent avec l'engrenage interne I (201) ;
l'engrenage interne I (201) est restreint et monté dans le support d'engrenage planétaire avant (21) ;
l'engrenage solaire II (19) est équipé de trois engrenages planétaires I (181) ;
les trois engrenages planétaires I (181) s'engagent avec le pignon (39); et
le support d'engrenage planétaire arrière (22) est connecté au support d'engrenage planétaire avant (21).

4. Outil de réglage électrique de rivet aveugle selon la revendication 1, **caractérisé en ce que** le système de rivetage par traction comprend
une tête (1) ;
un manchon extérieur (2) ;
un élément à trois mâchoires (3) ;
un manchon de serrage (4) ;
un ensemble de noyau supérieur (5) ;
un ressort de noyau supérieur (6) ; et
un manchon de ressort (7) ;
dans lequel
le manchon extérieur (2) est connecté au support de palier avant (12) par l'intermédiaire de l'écrou de blocage du manchon extérieur (8) ;
la tête (1) est prévue sur une extrémité avant du manchon extérieur (2) ; l'élément à trois mâchoires (3) est prévu à l'extrémité arrière de la tête (1) ;
le manchon de serrage (4) est prévu sur l'élément à trois mâchoires (3) ;
le manchon de serrage (4) est prévu dans le manchon extérieur (2) ;
l'ensemble de noyau supérieur (5) est prévu sur la partie arrière de l'élément à trois mâchoires (3) ;
l'ensemble de noyau supérieur (5) comprend un tube de noyau supérieur (32) et un noyau supérieur (31) qui est prévu sur une extrémité avant du tube de noyau supérieur (32) ;
le tube de noyau supérieur (32) est gainé avec le ressort de noyau supérieur (6); et
le manchon de ressort (7) est prévu à l'extérieur du ressort de noyau supérieur (6).

5. Outil de réglage électrique de rivet aveugle selon la revendication 4, **caractérisé en ce que** l'outil de réglage électrique de rivet aveugle en outre comprend :
un couvercle extérieure (25) ;
un déclencheur (28) ; et
une carte de circuit (27) ;
dans lequel
le manchon de ressort (7) est connecté à l'extrémité avant de la tige filetée à bille (11) ;
le réducteur d'engrenages planétaires est fixé à l'écrou de tige filetée (13) par l'intermédiaire de l'arbre de connexion (15) ;
l'ensemble moteur à puissance est connecté au réducteur d'engrenages planétaires par l'intermédiaire de l'engrenage moteur (33) sur l'arbre moteur creux (30) ;
un tube de décharge (24) passe à travers l'arbre moteur creux (30) et le réducteur d'engrenages planétaires pour se loger à l'extérieur du tube de noyau supérieur (32) ;
le couvercle extérieur (25) est équipé de la carte de circuit (27), d'un déclencheur (28) et d'une plaque de commande de déplacement (29) ;
la carte de circuit (27) est respectivement connectée au moteur (23) et à la plaque de commande de déplacement (29) par une ligne de commande ;
les deux extrémités de la plaque de commande de déplacement (29) sont équipées d'un inducteur (34, 35) ;
le bloc de positionnement de la roue libre (9) est équipé d'un aimant (10) ;
l'inducteur (34, 35) est situé sous l'aimant (10).
